# EUROPÄISCHE PATENTANMELDUNG

(11) **EP 2 030 711 A1**
(43) Veröffentlichungstag der Anmeldung: **04.03.2009**
(21) Anmeldenummer: 07405260.6
(22) Anmeldetag: 30.08.2007
(51) Int. Cl.: B23C 5/10

(54) **Fräswerkzeug für die Bearbeitung weicher Werkstoffe**

(71) Anmelder: Fraisa SA, 4512 Bellach (CH)
(72) Erfinder: Dr. Lux, Stefan, 4500 Solothurn (CH)
(74) Vertreter: Roshardt, Werner Alfred

(57) **Zusammenfassung**

Bei einem Fräswerkzeug für die Bearbeitung weicher Werkstoffe, mit einem in einer Werkzeugachse liegenden und zur Ausführung einer Drehbewegung um die Werkzeugachse vorgesehenen Schaft mit Schneidteil, weist das Schneidteil zwei wendelförmig angeordnete, um den Durchmesser (d) eines Kerns (20) gegeneinander versetzte, einen Werkzeugaussendurchmesser (D) definierenden und je eine Spannut (22, 24) begrenzende Hauptschneiden (16, 18) auf. Der Kerndurchmesser (d) beträgt max. 30 % des Werkzeugaussendurchmessers (D).

## Beschreibung

Die Erfindung betrifft ein Fräswerkzeug für die Bearbeitung weicher Werkstoffe, mit einem in einer Werkzeugachse liegenden und zur Ausführung einer Drehbewegung um die Werkzeugachse vorgesehenen Schaft mit Schneidteil, wobei das Schneidteil zwei wendelförmig angeordnete, um den Durchmesser eines Kerns gegeneinander versetzte, einen Werkzeugaussendurchmesser definierenden und je eine Spannut begrenzende Hauptschneiden aufweist.

Der Erfindung liegt die Aufgabe zugrunde, ein Fräswerkzeug der eingangs genannten Art zu schaffen, mit dem die Fräsleistung im Vergleich zu herkömmlichen Fräsern nach dem Stand der Technik erhöht werden kann.

Zur erfindungsgemässen Lösung der Aufgabe führt, dass der Kerndurchmesser max. 30 % des Werkzeugaussendurchmessers beträgt.

Der erfindungswesentliche Kern des Fräswerkzeugs ist der gegenüber dem Werkzeugaussendurchmesser extrem kleine Kerndurchmesser, der eine Grössenordnung hat, die bisher nur von Wendelbohrern bekannt war. Überraschenderweise hat sich gezeigt, dass entgegen der in der Fachwelt herrschenden Meinung ein derart geringer Kerndurchmesser auch bei Fräsern eingesetzt werden kann, ohne dass die Gefahr eines Fräserbruches als Folge einer mechanischen Instabilität auftritt. Entscheidend für die Stabilität eines Fräsers scheint somit nicht, wie bisher allgemein angenommen, ein minimal erforderlicher Kerndurchmesser von etwa 50 % des Werkzeugaussendurchmessers zu sein. Ein kleinerer Kerndurchmesser bedeutet eine Verlagerung von Werkzeugmaterial gegen die Werkzeugaussenseite. Die Stege mit den Hauptschneiden liefern hier offenbar einen erheblichen Beitrag an die Gesamtstabilität des Fräsers.

Bevorzugt liegt der Kerndurchmesser zwischen etwa 15 und 25 %, insbesondere bei etwa 20 % des Werkzeugaussendurchmessers.

Die durch den kleinen Kerndurchmesser entstehenden kleinsten Nutgrundradien liegen bevorzugt im Bereich zwischen etwa 20 und 40 %, insbesondere zwischen 30 und 40 % des Werkzeugaussendurchmessers.

Da das Fräswerkzeug für die Bearbeitung von weichen Werkstoffen wie z. B. Reinaluminium, die zu starkem Kleben bzw. starker Adhäsion am Werkzeug neigen, vorgesehen ist, beträgt der Spanwinkel zur Bearbeitung dieser Werkstoffe mindestens 15° und liegt bevorzugt zwischen 15 und 25,° insbesondere bei etwa 20°. Aus den gleichen Gründen wird ein Drallwinkel gewählt, der mindestens 15° beträgt und vorzugsweise zwischen 20 und 50°, weiter bevorzugt zwischen 30 und 50°, insbesondere bei etwa 40° liegt.

Der bevorzugte Anwendungsbereich des erfindungsgemässen Fräswerkzeugs liegt in der Bearbeitung von Reinaluminium, weichen Aluminiumlegierungen, weichen Kupferlegierungen und weichen Stählen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Seitenansicht eines Hartmetall-Schaftfräsers;
- Fig. 2 einen Schnitt durch den Fräser von Fig. 1 nach deren Linie X-X.

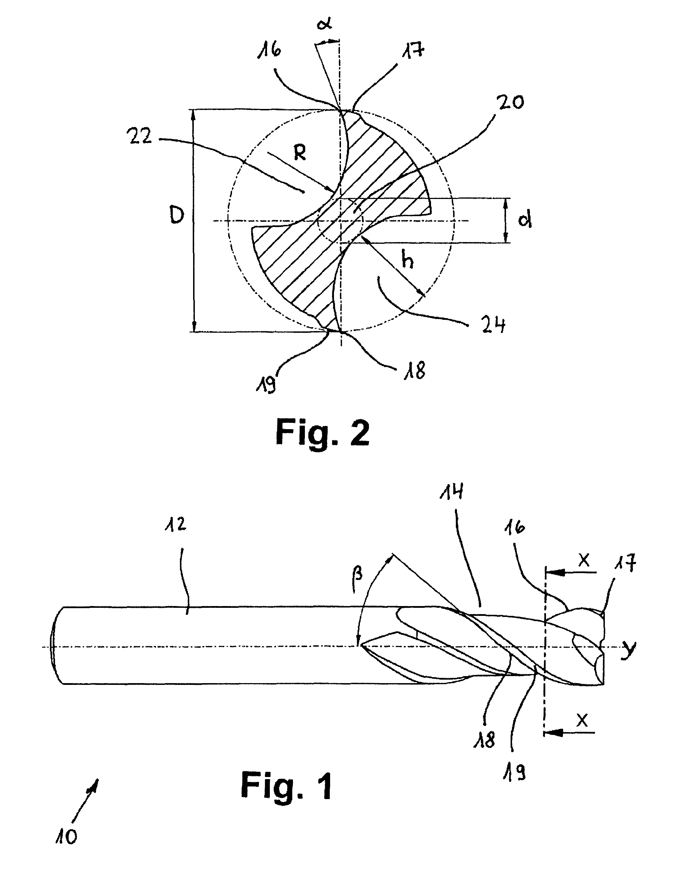

Ein Hartmetall-Schaftfräser 10 weist gemäss Fig. 1 einen Schaft 12 auf, welchem ein Schneidteil 14 als Bearbeitungs- oder Fräswerkzeug in der Werkzeugachse y aufgesetzt ist. Der Schaft 12 des Fräsers 10 dient zum Einspannen in eine aus Gründen der besseren Übersicht in der Zeichnung nicht wiedergegebene Spindel einer Fräsmaschine.

Das Schneidteil 14 besitzt zwei wendelförmig angeordnete, um den Durchmesser d eines Kerns 20 gegeneinander versetzte Hauptschneiden 16, 18, die bei einer Rotation des Fräsers 10 um die Werkzeugachse y einen Werkzeugaussendurchmesser D definieren. Die beiden Hauptschneiden, 16, 18 begrenzen je eine Spannut 22, 24.

In dem in der Zeichnung dargestellten Beispiel liegt das Verhältnis d:D bei 1:5, d.h. der Durchmesser d des Kerns 20 beträgt 20 % des Werkzeugaussendurchmessers D. Der gegenüber dem Werkzeugaussendurchmesser D extrem kleine Kerndurchmesser d führt zu einer Höhe h der Spannut 22, 24 von 40 % des Werkzeugaussendurchmessers D, wodurch sich ein grosser Spanraum ergibt. Ein weiteres positives Element für einen optimalen Spanraum ist der sich ebenfalls aus dem extrem kleinen Kerndurchmesser d ergebende, sehr grosse Nutgrundradius R, der um einen Faktor 2,5 bis 3 grösser ist als bei konventionellen Fräsern.

Der Spanwinkel α liegt bei dem in der Zeichnung dargestellten Fräser bei einem sehr hohen Wert von 20°, der Drallwinkel β bei 40°.

## Patentansprüche

1. Fräswerkzeug für die Bearbeitung weicher Werkstoffe, mit einem in einer Werkzeugachse (y) liegenden und zur Ausführung einer Drehbewegung um die Werkzeugachse (y) vorgesehenen Schaft (12) mit Schneidteil (14), wobei das Schneidteil (14) zwei wendelförmig angeordnete, um den Durchmesser (d) eines Kerns (20) gegeneinander versetzte, einen Werkzeugaussendurchmesser (D) definierenden und je eine Spannut (22, 24) begrenzende Hauptschneiden (16, 18) aufweist,
**dadurch gekennzeichnet, dass**
der Kerndurchmesser (d) max. 30 % des Werkzeugaussendurchmessers (D) beträgt.

2. Fräswerkzeug nach Anspruch 1, **dadurch gekennzeichnet, dass** der Kerndurchmesser (d) zwischen 15 und 25 % des Werkzeugaussendurchmessers (D) liegt.

3. Fräswerkzeug nach Anspruch 1 oder 2, **dadurch gekennzeichnet, dass** der kleinste Nutgrundradius (R) der Spannut (22,24) zwischen 20 und 40 %, insbesondere zwischen 30 und 40 % des Werkzeugaussendurchmessers (D) liegt.

4. Fräswerkzeug nach einem der Ansprüche 1 bis 3, **dadurch gekennzeichnet, dass** der Spanwinkel (α) mindestens 15° beträgt.

5. Fräswerkzeug nach Anspruch 4, **dadurch gekennzeichnet, dass** der Spanwinkel (α) zwischen 15 und 25° liegt.

6. Fräswerkzeug nach einem der Ansprüche 1 bis 5, **dadurch gekennzeichnet, dass** der Drallwinkel (β) mindestens 15° beträgt.

7. Fräswerkzeug nach Anspruch 6, **dadurch gekennzeichnet, dass** der Drallwinkel (β) zwischen 20 und 60°, insbesondere zwischen 30 und 50° liegt.

8. Verwendung eines Fräswerkzeugs nach einem der Ansprüche 1 bis 7 für die Bearbeitung von Reinaluminium, weichen Aluminiumlegierungen, weichen Kupferlegierungen und weichen Stählen.
